# EUROPEAN PATENT APPLICATION

(11) **EP 4 725 374 A1**
(43) Date of publication of application: **15.04.2026**
(21) Application number: 25195988.8
(22) Date of filing: 14.08.2025
(51) Int. Cl.: A47J 37/06

(54) **COOKING APPLIANCE**

(30) Priority: 09.10.2024 CN 202422427658 U; 24.01.2025 CN 202520174457 U; 13.02.2025 CN 202520231617 U
(71) Applicant: Shenzhen Chenbei Technology Co., Ltd., Shenzhen, Guangdong 518000 (CN)
(72) Inventor: Mao, Yanhao, Shenzhen, 518000 (CN); Wu, Miaosheng, Shenzhen, 518000 (CN); Liu, Lei, Shenzhen, 518000 (CN)
(74) Representative: Bird & Bird LLP - Hamburg

(57) **Abstract**

The embodiments of the present application disclose a cooking appliance, including: a housing provided with an accommodating cavity therein; a frying receptacle removably disposed inside the accommodating cavity, the frying receptacle being provided with a cooking cavity, and one end of the cooking cavity being configured as an open end; a blower assembly disposed inside the housing, the blower assembly including an electric motor, a hot air fan and a cooling fan, where a cross-sectional area of the cooling fan covers at least part of a cross-sectional area of the electric motor in a vertical direction; and a heating element located between the open end and the blower assembly, the hot air fan blowing a fluid to pass through the heating element and then circulate in the cooking cavity.

## Description

The present application claims priority to Chinese Patent Application No. 202520174457.8 filed on January 24, 2025 and entitled "AIR FRYER", and to Chinese Patent Application No. 202422427658.2 filed on October 9, 2024 and entitled "COOKING APPLIANCE", which are incorporated herein by reference in their entirety.

### Technical Field

The present application relates to the technical field of household appliances, and in particular to a cooking appliance.

### Background Art

An air fryer is a kitchen appliance for frying foods by using hot air. Compared with traditional deep-fried foods, foods fried with such cooking appliances contain less fat, thereby providing users with a healthier dietary option.

Nowadays, the air fryer typically heats food ingredients with hot air generated by a blower assembly, to ensure the desired cooking effects. However, for cooking appliances with a plurality of cooking cavities arranged in a vertical direction, use of a conventional blower assembly in which the electric motor is arranged above the fan can lead to an excessively large height, rendering the cooking appliances bulky.

### Summary

Embodiments of the present application disclose a cooking appliance which features a thin blower assembly, and therefore is compact.

One example provides a cooking appliance comprising: a housing defining an accommodating cavity; a frying bucket removably disposed inside the accommodating cavity; a blower assembly disposed inside the housing, the blower assembly comprising an electric motor, a hot air fan and a cooling fan, wherein a cross-section of the cooling fan overlaps a cross-section of the electric motor vertically; and a heating element located between the frying bucket and the blower assembly, and the hot air fan blowing airflow heated by the heating element to circulate within the frying bucket.

According to the example, the housing may further comprise: an outer wall forming the accommodating cavity; a cooking chamber disposed inside the accommodating cavity; a reflector, a fluid channel in communication with the outside being formed between the reflector and the cooking chamber and the outer wall, and the reflector being provided with a hot air cavity for accommodating the hot air fan.

According to the example, the cooking appliance may further comprise: a heat shield disposed in the fluid channel, wherein a cold air cavity is formed between the heat shield and the reflector, and a surface of the heat shield facing away from the cold air cavity is used to secure a circuit device.

According to the example, the housing may be provided with an air outlet in communication with the fluid channel, and the cooling fan and the electric motor are disposed in the cold air cavity, to drive the fluid in the fluid channel to flow from the air outlet.

According to the example, the cooking appliance may further comprise: a partition plate dividing the outer wall into a first outer wall and a second outer wall that are disposed in the vertical direction; and the fluid channel in the first outer wall may be a first fluid channel, the fluid channel in the second outer wall may be a second fluid channel, and the first fluid channel and the second fluid channel may be independent of each other.

According to the example, the frying receptacle may comprise: an upper pot disposed in the first outer wall and a lower pot disposed in the second outer wall; and the cooking chamber may further comprise an upper cooking chamber and a lower cooking chamber, the upper cooking chamber may be configured to accommodate the upper pot, and the lower cooking chamber may be configured to accommodate the lower pot.

According to the example, the cooking appliance may further comprise: a top cover covering the first outer wall, the top cover being provided with a first air inlet, and the first air inlet being in communication with the first fluid channel; and/or a base integrally formed with or removably connected to the second outer wall, the base being provided with a second air inlet, and the second air inlet being in communication with the second fluid channel.

According to the example, the lower cooking chamber may comprise a mounting portion at a bottom, the mounting portion being provided with a thermal radiation element for heating the lower pot.

According to the example, the blower assembly may further comprise a holder configured to secure the blower assembly to the heat shield.

According to the example, the cooling fan may be fixedly connected to the electric motor, the cooling fan may be provided with flow guide ribs arranged at intervals, and a cold air vent may be formed between every two adjacent flow guide ribs.

An embodiment of the present application provides a cooking appliance, including: a housing provided with an accommodating cavity therein; a frying receptacle removably disposed inside the accommodating cavity, the frying receptacle being provided with a cooking cavity, and one end of the cooking cavity being configured as an open end; a blower assembly disposed inside the housing, the blower assembly comprising an electric motor, a hot air fan and a cooling fan, where a cross-sectional area of the cooling fan covers at least part of a cross-sectional area of the electric motor in a vertical direction; and a heating element located between the open end and the blower assembly, the hot air fan blowing a fluid to pass through the heating element and then circulate in the cooking cavity.

An embodiment of the present application provides a cooking appliance, including: a housing provided with an accommodating cavity therein; a frying receptacle removably disposed inside the accommodating cavity, the frying receptacle being provided with a cooking cavity, and one end of the cooking cavity being configured as an open end; a blower assembly disposed inside the housing, the blower assembly comprising an electric motor, a hot air fan and a cooling fan, where the cooling fan is at least partially disposed on a peripheral side of the electric motor; and a heating element located between the open end and the blower assembly, the hot air fan blowing a fluid to pass through the heating element and then circulate in the cooking cavity.

In a possible implementation, the housing further includes: an outer wall forming the accommodating cavity; a cooking chamber disposed in the outer wall; and a reflector forming communication with the outside between the reflector and the cooking chamber and the outer wall, the reflector being provided with a hot air cavity for accommodating the hot air fan.

In a possible implementation, a heat shield is disposed in the fluid channel, a cold air cavity is formed between the heat shield and the reflector, and a surface of the heat shield facing away from the cold air cavity is used to secure a circuit device.

In a possible implementation, the housing is provided with an air outlet, the air outlet is in communication with the fluid channel, and the cooling fan and the electric motor are disposed in the cold air cavity, to drive the fluid in the fluid channel to flow from the air outlet.

In a possible implementation, the cooking appliance further includes: a partition plate dividing the outer wall into a first outer wall and a second outer wall that are disposed in the vertical direction; and the fluid channel in the first outer wall is a first fluid channel, the fluid channel in the second outer wall is a second fluid channel, and the first fluid channel and the second fluid channel are independent of each other.

In a possible implementation, the frying receptacle includes an upper pot disposed in the first outer wall and a lower pot disposed in the second outer wall; and the cooking chamber further includes an upper cooking chamber and a lower cooking chamber, the upper cooking chamber being configured to accommodate the upper pot, and the lower cooking chamber being configured to accommodate the lower pot.

In a possible implementation, the cooking appliance further includes: a top cover covering the first outer wall, the top cover being provided with a first air inlet, and the first air inlet being in communication with the first fluid channel; and/or a base integrally formed with or removably connected to the second outer wall, the base being provided with a second air inlet, and the second air inlet being in communication with the second fluid channel.

In a possible implementation, the lower cooking chamber includes a mounting portion at a bottom, the mounting portion being provided with a thermal radiation element for heating the lower pot.

In a possible implementation, the blower assembly further includes a holder configured to secure the blower assembly to the heat shield.

In a possible implementation, the cooling fan is fixedly connected to the electric motor, the cooling fan is provided with airflow guide ribs arranged at intervals, and a cold air vent is formed between every two adjacent airflow guide ribs.

The present application has the beneficial effects as follows.

The cooking appliance in the embodiments of the present application features a thin blower assembly in which the cross-section of the cooling fan covers at least part of the cross-section of the electric motor in the vertical direction, and thus is compact, thereby accommodating the needs of small-sized kitchens.

### Brief Description of the Drawings

In order to describe the technical solutions in the embodiments of the present application more clearly, the drawings required for illustration of the embodiments will be briefly introduced below. Obviously, the drawings in the following description are only for some of the embodiments of the present application, and for those of ordinary skill in the art, other drawings can also be obtained from these drawings without any creative effort.
FIG. 1 is a first schematic structural diagram of a cooking appliance according to an embodiment of the present application;
FIG. 2 is an exploded structural view of a cooking appliance according to an embodiment of the present application;
FIG. 3 is a sectional view taken along line A-A in FIG. 1;
FIG. 4 is a first schematic assembly diagram of an electric motor and a cooling fan of a cooking appliance according to an embodiment of the present application;
FIG. 5 is a second schematic assembly diagram of an electric motor and a cooling fan of a cooking appliance according to an embodiment of the present application;
FIG. 6 is a third schematic assembly diagram of an electric motor and a cooling fan of a cooking appliance according to an embodiment of the present application;
FIG. 7 is a sectional view taken along line B-B in FIG. 3; and
FIG. 8 is a second schematic structural diagram of a cooking appliance according to an embodiment of the present application.

List of reference signs:
Housing 10; Outer wall 101; First outer wall 1011; Second outer wall 1012; Cooking chamber 102; Upper cooking chamber 1021; Lower cooking chamber 1022; Mounting portion 10221; Frying receptacle 20; Upper pot 21; Lower pot 22; Blower assembly 30; Hot air fan 301; Cooling fan 302; Electric motor 303; Holder 3031; Flow guide rib 3032; Cold air vent 3033; Stator 3035; Rotor 3036; Cold air cavity 304; Heat shield 40; Reflector 50; Air outlet 60; First air outlet 601; Second air outlet 602; Heating element 70; Fluid channel 80; First fluid channel 801; Second fluid channel 802; Top cover 90; First air inlet 901; Base 100; Second air inlet 100a; Thermal radiation element 110; Circuit device 120; Partition plate 130.

### Detailed Description of Embodiments

The technical solutions in the embodiments of the present application will be clearly and completely described below with reference to the accompanying drawings of the embodiments of the present application. Apparently, the embodiments described are merely some rather than all of the embodiments of the present application. All other embodiments obtained by those of ordinary skill in the art based on the embodiments of the present application without creative efforts shall fall within the scope of protection of the present application.

In the present invention, the orientation or positional relationship indicated by the terms such as "up", "down", "left", "right", "front", "rear", "top", "bottom", "inner", "outer", "vertical", "horizontal", "transverse" and "longitudinal" is based on the orientation or positional relationship shown in the drawings. These terms are primarily intended to better describe the present application and embodiments thereof, and are not intended to limit that the indicated apparatus, element, or component must have a particular orientation, or be constructed and operated in a particular orientation.

In addition, some of the foregoing terms may be used to express other meanings besides the orientation or positional relationship. For example, the term "up" may also be used to express a certain attachment or connection relationship in some cases. For those of ordinary skill in the art, the specific meaning of the terms mentioned above in the present application should be construed according to specific circumstances.

Furthermore, the terms "mounted", "arranged", "provided", "connect" and "connected" should be construed broadly. For example, they may mean a fixed connection, a removable connection, or an integral structure; or may mean a mechanical connection or an electrical connection; or may mean a direct connection, an indirect connection via an intermediate medium, or internal communication between two apparatuses, elements or components. For those of ordinary skill in the art, the specific meaning of the terms mentioned above in the present application should be construed according to specific circumstances.

In addition, the terms such as "first" and "second" are mainly used to distinguish different apparatuses, elements or components (the specific types and structures may be the same or different), and are not used to indicate or imply the relative importance and number of indicated apparatuses, elements or components. Unless otherwise stated, "a plurality of" means two or more.

The cooking appliance proposed in this invention may be any of air fryers adapted to a single frying receptable, dual frying receptables or even multiple frying receptables. The cooking appliance has a housing 10 and a top cover 90. A removable frying receptacle 20, a heating element 70, a blower assembly 30, a reflector 50, a heat shield 40 and a thermal radiation element 110 are arranged inside the housing 10. The housing 10 has an outer wall 101 and an inner wall 102. The inner wall 102 defines an accommodating cavity inside, for receiving the frying receptacle 20. The housing 10 provides structural support for the frying receptacle 20 or other operating components. The housing 10 may be made of heat-resistant material to ensure the safety during use of the cooking appliance.

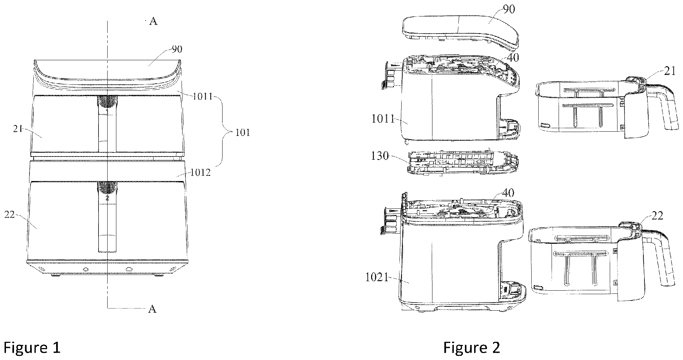

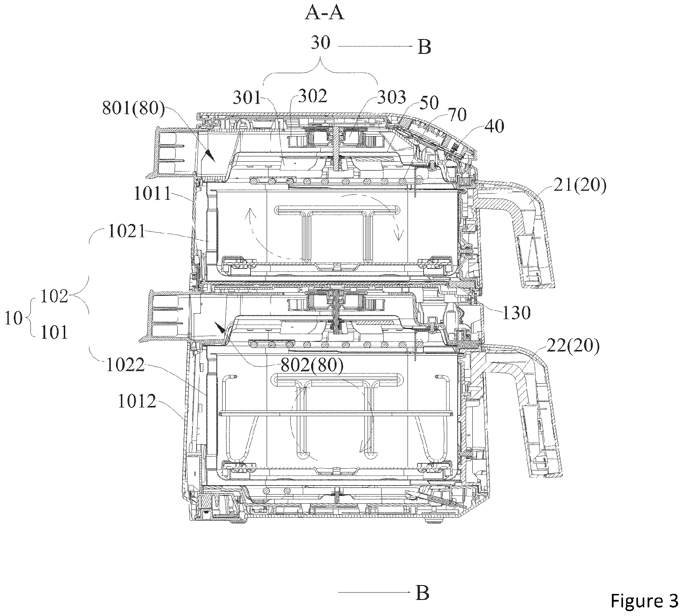

As shown in FIGS. 2 and 3, the frying receptacle 20 is removably disposed inside the accommodating cavity. The frying receptacle 20 defines an open cooking cavity inside for receiving food ingredients. This facilitates removing food ingredients out of the frying receptacle 20 and placing food ingredients into the frying receptacle 20. In addition, the open cooking cavity also facilitates hot air circulating freely throughout the frying receptacle 20, for evenly heating food ingredients inside the cooking cavity.

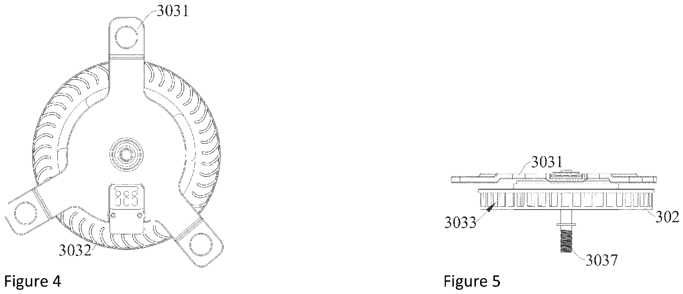

As shown in FIG. 3, the cooking appliance also includes a blower assembly 30, arranged inside the housing 10, i.e., the accommodating cavity. The blower assembly 30 includes an electric motor 303, a hot air fan 301 and a cooling fan 302. In some embodiments, as shown in FIG. 5, the hot air fan 301 is engaged with a rotating shaft 3037 of the electric motor 303. As shown in FIGS. 5 to 6, the electric motor 303 includes a stator 3035 and a rotor 3036 enclosing the stator 3035. The cooling fan 302 encloses the rotor 3036. That is, the cooling fan 302 at least partially corves the rotor 3036, i.e., the electric motor 303 vertically, i.e., along the height direction of the cooking appliance. In other words, a cross section of the cooling fan 302 overlaps a cross section of the electric motor 303 along the height direction of the cooking appliance. This arrangement makes the blower assembly compact vertically, i.e., is thinner by comparison with the existing blower assembly in which the cooling fan is arranged above the electric motor. Accordingly, a cooking appliance equipped with such a blower assembly is also compact vertically, and therefore is convenient for small-sized kitchens.

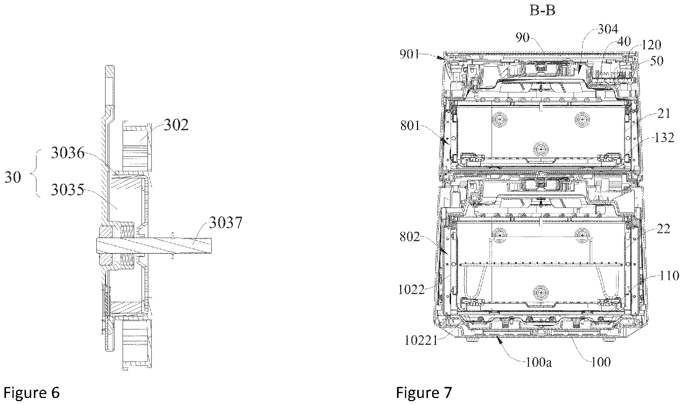

FIG. 6 illustrates that the electric motor 303 is inserted into a hollow portion at the middle of the cooling fan 302 partially. In other examples, the electric motor 302 can be fully inserted into the hollow cooking fan, depending on the height of the electric motor and the height of the cooking fan.

In some embodiments, the cooling fan 302 is attached to the rotor 3036 of the electric motor 303. That is, the cooling fan 302 tightly encloses the rotor 3036 of the electric motor 30. In other embodiments, the cooling fan may enclose the rotor of the electric motor in other ways, such as being spaced apart from the rotor of the electric motor.

The cooling fan 302 has multiple airflow guide ribs 3032 arranged radially at intervals along the round side wall of the hollow portion. Adjacent airflow guide ribs 3032 define a cold air vent 3033. The cold air vents 3033 are in fluid communication with the hollow portion.

In some embodiments, the rotating shaft 3037 of the electric motor 303 is also engaged with the hot air fan 301, which is arranged below the cooling fan 302. That is, the electric motor 303 can simultaneously actuate the cooling fan 302 and the hot air fan 301. In other words, the cooling fan 302 that facilitates circulating the cold air and the hot air fan 301 that facilitates circulating the hot air can share the common electric motor 303. This arrangement also renders the blower assembly compact and cost-effective.

The heating element 70 is arranged slightly above the frying receptacle 20 (when placed into the accommodating cavity) and below the blower assembly 30, that is, below the hot air fan 301. Airflow produced by the hot air fan 301 can be heated by the heating element 70, and then circulates freely throughout the frying receptacle, for evenly frying the food ingredients inside the frying receptacle. This is somewhat similar to the deep frying in terms of cooking crisp food, but food fried by the air fryer is less fat that the conventional deep-fried food due to less and even no use of oil.

With such a configuration, according to the cooking appliance provided by the embodiments of the present application, the cross-sectional area of the cooling fan 302 covers at least part of the cross-sectional area of the electric motor 303 in the vertical direction, the height of the blower assembly 30 is thus decreased, and then a compact design of the cooking appliance in the height direction is achieved, thereby ensuring that the cooking appliance may be further miniaturized to meet the use requirements in a kitchen of a small-sized house.

As shown in FIG. 3 and 7, the reflector 50 is disposed above hot air fan 301 and below the cooling fan 302, covering the frying receptacle 20 (when placed into the accommodating cavity). The outer wall 101, the inner wall 102 and the reflector 50 together define a flow channel 80 for ventilation. In some examples, the reflector 50

Specifically, the reflector 50 may further be indirectly connected to the cooking chamber 102, a side space between the cooking chamber 102 and the outer wall 101 is in communication with a top space between the reflector 50 and the outer wall 101, and the fluid channel 80 in communication with the outside is formed.

As shown in FIGS. 3 and 7, an inner side of the reflector 50 refers to a side of the reflector 50 close to a lower pot 22, and an outer side of the reflector 50 refers to a side of the reflector 50 away from the lower pot 22. The heating element 70 and the hot air fan 301 are located on the inner side of the reflector 50, and the heating element 70 is located on one side of the hot air fan 301 the reflector 50. The cooling fan 302 and the electric motor 303 are located on the outer side of the reflector 50.

It should be understood that the cooking chamber 102 externally surrounds the frying receptacle 20, the frying receptacle 20 generates a large amount of heat radiation to an ambient environment due to the circulation of the hot air in the frying receptacle 20, and the heat on the outer periphery of the frying receptacle 20 may be dissipated as soon as possible by disposing the fluid channel 80 on the outer periphery of the frying receptacle 20, thereby preventing the heat from being radiated to the outer wall 101 and from causing the temperature of the outer wall 101 to be too high. In addition, the fluid channel 80 located on a peripheral side of the frying receptacle 20 is also conducive to keeping the temperature of the cooking cavity inside the frying receptacle 20 within a set range.

The side of the reflector 50 facing away from a hot air cavity is located in the fluid channel 80, and since the heating element 70 generates high-temperature thermal energy during operation, such thermal energy is radiated to the outer wall 101 after the heating element 70 operates for a long period of time, thereby bringing risks of deformation of the outer wall 101 and a scald injury to a user. Therefore, by forming the fluid channel 80 in the top space between the reflector 50 and the outer wall 101, the hot air radiated from the heating element 70 to the outer periphery may be brought out of the cooking appliance, thereby improving the safety of the use of the cooking appliance.

In some embodiments, as shown in FIGS. 3 and 7, the reflector 50 is configured as a cover structure to form the hot air cavity for accommodating the hot air fan 301 and the heating element 70, and the hot air cavity is in communication with the cooking cavity of the frying receptacle 20.

In some embodiments, as shown in FIGS. 3 and 7, the cooking appliance further includes a heat shield 40. The heat shield 40 is disposed in the fluid channel 80, and a cold air cavity 304 is formed between the reflector 50 and the heat shield 40. The cold air cavity 304 may be part of the fluid channel 80.

In some embodiments, a surface of the heat shield 40 facing away from the cold air cavity 304 is used to secure a circuit device 120.

Specifically, the circuit device 120 may include a circuit board and electronic components (a processor, a temperature detection unit, etc.) disposed on the circuit board.

Since the heat shield 40 forms the cold air cavity 304, a temperature drop of the heat shield 40 is within a controllable temperature range. By disposing a circuit element on the side of the heat shield 40 facing away from the cold air cavity 304, it may be ensured that the circuit element is also in a controllable temperature environment, and the operation stability and the service life of the circuit element are ensured.

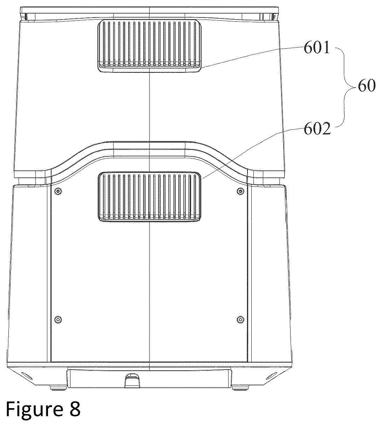

In some embodiments, as shown in FIG. 8, the housing 10 may be provided with an air outlet 60, the air outlet 60 being in communication with the fluid channel 80 to implement communication between the fluid channel 80 and the outside.

In some embodiments, as shown in FIGS. 4 to 6, the blower assembly 30 further includes a holder 3031, and the holder 3031 is configured to secure the blower assembly 30 to the heat shield 40, that is, the heat shield 40 provides structural support for the blower assembly 30.

In some embodiments, in some embodiments, the heat shield 40 may be disposed on top of the cooking chamber 102, and the reflector 50 may be disposed on the heat shield 40. In this way, the heat shield 40 may support both the blower assembly 30 and the reflector 50.

In some embodiments, the cooling fan 302 and the electric motor 303 are disposed in the cold air cavity 304. The cold air cavity 304 may further dissipate heat from the electric motor 303.

The cooling fan 302 and the electric motor 303 are disposed in the cold air cavity 304, and when the electric motor 303 operates, the cooling fan 302 is driven to rotate, so that the flow of the fluid in the cold air cavity 304 may be accelerated, an exchange rate of hot air and cold air is then increased, and the heat dissipation efficiency is improved. After the cold air flowing from the outside undergoes heat exchange in the fluid channel 80, the cold air is discharged from the cooking appliance through the air outlet 60, thereby ensuring the safety of the use of the cooking appliance.

In order to prevent the air from being blown to the user after heat exchange, the air outlet 60 may be disposed at the back of the cooking appliance.

In some embodiments, as shown in FIGS. 2 and 3, the cooking appliance further includes a partition plate 130. The partition plate 130 divides the outer wall 101 into a first outer wall 1011 and a first outer wall 1011 disposed in the vertical direction. The first outer wall 1011 and the partition plate 130 form an upper cavity, and the second outer wall 1012 and the partition plate 130 form a lower cavity.

It should be noted that two frying receptacles 20, two fan assemblies 30, two heat shields 40 and two reflectors 50 are provided and are respectively located in the upper cavity and the lower cavity.

The frying receptacle 20, the blower assembly 30, the heat shield 40 and the reflector 50 located in the upper cavity may be an upper pot 21, a first blower assembly, a first heat shield and a first reflector respectively. The frying receptacle 20, the blower assembly 30, the heat shield 40 and the reflector 50 located in the lower cavity may be the lower pot 22, a second blower assembly, a second heat shield and a second reflector respectively.

As shown in FIGS. 2 and 3, the cooking appliance may include a partition plate 130, the partition plate 130 being connected to the first outer wall 1011 and the second outer wall 1012 and located between the first outer wall 1011 and the second outer wall 1012.

The partition plate 130 has a thermal insulation property and may be made of a high-temperature-resistant thermally insulating material, for example, a thermosetting insulating material, to ensure that the partition plate 130 has the thermal insulation property in a high-temperature cooking environment. In this way, the partition plate 130 may reduce heat transfer between the upper pot 21 and the lower pot 22, so that the food materials cooked in the upper pot 21 and the lower pot 22 achieve desired cooking effects.

In some embodiments, the fluid channel 80 mentioned above is formed in each accommodating cavity. For ease of distinction, the fluid channel 80 located in the upper cavity is referred to as a first fluid channel 801 in the embodiments of the present application. The fluid channel 80 mentioned above is also formed in the lower cavity, and the fluid channel 80 located in the lower cavity is referred to as a second fluid channel 802 in the embodiments of the present application.

Further, as shown in FIG. 8, the air outlet 60 includes a first air outlet 601 and a second air outlet 602, the first air outlet 601 is formed in the first outer wall 1011, and the second air outlet 602 is formed in the second outer wall 1012. The first air outlet 601 is in communication with the first fluid channel 801, and the second air outlet 602 is in communication with the second fluid channel 802.

In some embodiments, the first fluid channel 801 and the second fluid channel 802 are independent of each other, that is, air flows in the first fluid channel 801 and the second fluid channel 802 do not circulate. The first fluid channel 801 and the second fluid channel 802 are isolated from each other to prevent that the air flow in the upper cavity and the air flow in the lower cavity circulate to cause taint of odor of the food materials during cooking.

In some embodiments, the frying receptacle 20 includes the upper pot 21 in the upper cavity and the lower pot 22 in the lower cavity. The upper pot 21 is separable from the first outer wall 1011, and the lower pot 22 is separable from the second outer wall 1012.

It should be noted that the cooking appliance is provided with the upper pot 21 and the lower pot 22 and may be more adapted to a scenario where a plurality of food materials are cooked at a time, such that different types of food materials may be placed in the upper pot 21 and the lower pot 22 respectively and are cooked in the upper cavity and the lower cavity independent of each other, the taint of odor and attachment of the different types of food materials do not occur, the user may cook different food materials simultaneously, and use scenarios of the cooking appliance are enriched.

In some embodiments, the outer wall 101 includes a first outer wall 1011 and a second outer wall 1012. The first outer wall 1011 is located above the second outer wall 1012.

In some embodiments, the cooking chamber 102 includes an upper cooking chamber 1021 and a lower cooking chamber 1022. The upper cooking chamber 1021 is disposed in the upper cavity and located inside the first outer wall 1011. The lower cooking chamber 1022 is disposed in the lower cavity and located inside the second outer wall 1012.

In some embodiments, the upper cooking chamber 1021 is configured to accommodate the upper pot 21. The second outer wall 1012 is configured to accommodate the lower pot 22.

A first fluid channel 801 is formed between the first outer wall 1011 and the upper cooking chamber 1021 and the first reflector 501. Since hot air flows cyclically in the upper pot 21, the upper pot 21 radiates relatively high heat energy to the outer periphery.

The first fluid channel 801 is disposed at the outer side and the top of the upper pot 21, and cold air may be injected into the first fluid channel 801, such that the first fluid channel 801 may quickly bring the hot air, which undergoes heat radiation from the upper pot 21, out of the cooking appliance through the first fluid channel 801, to prevent the first outer wall 1011 from being heated to a higher temperature under the heat radiation of high heat, and the risk of the user being scalded is reduced.

The second fluid channel 802 is formed between the second outer wall 1012 and the lower cooking chamber 1022 and the second reflector 502. Since hot air flows cyclically in the lower pot 22, the lower pot 22 radiates relatively high heat energy to the outer periphery.

The second fluid channel 802 is disposed at the outer side and the top of the lower pot 22, and cold air may be injected into the second fluid channel 802, such that the second fluid channel 802 may quickly bring the hot air, which undergoes heat radiation from the lower pot 22, out of the cooking appliance through the second fluid channel 802, to prevent the second outer wall 1012 from being heated to a higher temperature under the heat radiation of high heat, and the risk of the user being scalded is reduced.

In some embodiments, the cooking appliance further includes a top cover 90, the top cover 90 is connected to the first outer wall 1011, and the upper cavity is formed among the first outer wall 1011, the top cover 90 and the partition plate 130.

In some embodiments, as shown in FIGS., the cooking appliance further includes a first air inlet 901. The first air inlet 901 is formed in the top cover 90 and located at a joint of the first outer wall 1011 and the top cover 90, and the first air inlet 901 is in communication with the first fluid channel 801.

The top cover 90 is connected to the top of the first outer wall 1011, and the top cover 90 is provided with the first air inlet 901 in communication with the first fluid channel 801. By means of the first air inlet 901 formed in the top cover 90, a cold air entry path is provided for the first fluid channel 801, the heat energy in the first fluid channel 801 may be quickly dissipated, and the heat dissipation efficiency of the upper cavity is improved.

The top cover 90 includes a cover body and a decorative ring. The cover body may be an appearance component and is located at the top of the entire cooking appliance. An inner side of the cover body, that is, a side facing the upper cavity, is provided with the decorative ring connected to the first outer wall 1011, and the decorative ring is configured to be annular in order to improve the stability of connection between the first outer wall 1011 and the decorative ring.

As shown in FIG. 7, the cold air entering the second fluid channel 802 from the second air inlet 100a flows from bottom to top under the disturbance of the cooling fan 302 located in the lower cavity, then enters the cold air cavity 304 to pass through the cooling fan 302 and is later discharged from the second fluid channel 802.

In some embodiments, as shown in FIG. 7, the cooking appliance further includes a thermal radiation element 110. The thermal radiation element 110 is disposed at the bottom of the lower cooking chamber 1022. The thermal radiation element 110 and the heating element 70 are spaced apart in the height direction, and the lower pot 22 is located between the heating element 70 and the thermal radiation element 110 in the lower cavity.

Optionally, the thermal radiation element 110 may be a heating tube, an infrared heating element 70, a ceramic heating element 70, etc.

The provision of the thermal radiation element 110 not only improves the speed of heating the food materials, and also ensures the uniformity of heating the food materials. Since the thermal radiation element 110 and the heating element are spaced apart in the height direction, the food material may be subjected to hot air and heat radiation during cooking, the thermal radiation element 110 radiates heat energy from the bottom upwards, and the heat energy and the hot air blown by the hot air fan 301 from the top produce an all-around heating effect on the food materials. The food materials may be subjected to the efficiently cycled hot air and directly penetrating heat radiation during cooking, so it is ensured that surfaces of the food materials have a crisp taste, and meanwhile the bottoms of the food materials may be further prevented from being undercooked.

It should be finally noted that the above embodiments are merely used for illustrating rather than limiting the technical solution of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the present application.

## Claims

1. A cooking appliance, **characterized by** comprising:
a housing provided with an accommodating cavity therein;
a frying receptacle removably disposed inside the accommodating cavity, the frying receptacle being provided with a cooking cavity, and one end of the cooking cavity being configured as an open end;
a blower assembly disposed inside the housing, the blower assembly comprising an electric motor, a hot air fan and a cooling fan, wherein the cooling fan surrounds at least part of the electric motor vertically; and
a heating element located between the open end and the blower assembly, the hot air fan blowing a fluid to pass through the heating element and then circulate in the cooking cavity.

2. The cooking appliance according to claim 1, **characterized in that** the housing further comprises:
an outer wall forming the accommodating cavity;
a cooking chamber disposed inside the accommodating cavity;
a reflector, a fluid channel in communication with the outside being formed between the reflector and the cooking chamber and the outer wall, and the reflector being provided with a hot air cavity for accommodating the hot air fan.

3. The cooking appliance according to claim 2, **characterized in that** the cooking appliance further comprises:
a heat shield disposed in the fluid channel, wherein a cold air cavity is formed between the heat shield and the reflector, and a surface of the heat shield facing away from the cold air cavity is used to secure a circuit device.

4. The cooking appliance according to claim 3, **characterized in that**
the housing is provided with an air outlet in communication with the fluid channel, and the cooling fan and the electric motor are disposed in the cold air cavity, to drive the fluid in the fluid channel to flow from the air outlet.

5. The cooking appliance according to claim 2, **characterized in that** the cooking appliance further comprises:
a partition plate dividing the outer wall into a first outer wall and a second outer wall that are disposed in the vertical direction; and the fluid channel in the first outer wall is a first fluid channel, the fluid channel in the second outer wall is a second fluid channel, and the first fluid channel and the second fluid channel are independent of each other.

6. The cooking appliance according to claim 5, **characterized in that**
the frying receptacle comprises an upper pot disposed in the first outer wall and a lower pot disposed in the second outer wall; and
the cooking chamber further comprises an upper cooking chamber and a lower cooking chamber, the upper cooking chamber being configured to accommodate the upper pot, and the lower cooking chamber being configured to accommodate the lower pot.

7. The cooking appliance according to claim 5, **characterized in that** the cooking appliance further comprises:
a top cover covering the first outer wall, the top cover being provided with a first air inlet, and the first air inlet being in communication with the first fluid channel;
and/or
a base integrally formed with or removably connected to the second outer wall, the base being provided with a second air inlet, and the second air inlet being in communication with the second fluid channel.

8. The cooking appliance according to claim 6, **characterized in that**
the lower cooking chamber comprises a mounting portion at a bottom, the mounting portion being provided with a thermal radiation element for heating the lower pot.

9. The cooking appliance according to claim 3, **characterized in that**
the blower assembly further comprises a holder configured to secure the blower assembly to the heat shield.

10. The cooking appliance according to any one of claims 1 to 9, **characterized in that**
the cooling fan is fixedly connected to the electric motor, the cooling fan is provided with flow guide ribs arranged at intervals, and a cold air vent is formed between every two adjacent flow guide ribs.
